# EUROPÄISCHE PATENTANMELDUNG

(11) **EP 2 952 798 A1**
(43) Veröffentlichungstag der Anmeldung: **09.12.2015**
(21) Anmeldenummer: 15170010.1
(22) Anmeldetag: 01.06.2015
(51) Int. Cl.: F16L 33/207, F16L 37/098, F16D 48/02

(54) **KONNEKTOR FÜR EIN HYDRAULISCHES KUPPLUNGSSYSTEM**

(30) Priorität: 03.06.2014 DE 102014210427
(71) Anmelder: Schaeffler Technologies AG & Co. KG, 91074 Herzogenaurach (DE)
(72) Erfinder: Henry, Jérôme, 45160 Olivet (FR); Pietak, Mickael, 45770 Saran (FR); Kempf, Loic, 45770 Saran (FR)

(57) **Zusammenfassung**

Die vorliegende Erfindung betrifft einen Konnektor (10) zum Verbinden eines Schlauchs (31) mit einem Rohr (30) zum Führen von Hydraulikflüssigkeit für ein hydraulisch betätigbares Kupplungssystem, wobei der Konnektor (10) einen ersten Verbindungsbereich (12) zum Anordnen und Fixieren des Schlauchs (31) aufweist und wobei der Konnektor (10) einen zweiten Verbindungsbereich (14) zum Anordnen und Fixieren des Rohres (30) aufweist, dadurch gekennzeichnet, dass der erste Verbindungsbereich (12) zum Befestigen des Schlauchs (31) mit einer Crimpverbindung ausgestaltet ist und dass der zweite Verbindungsbereich (14) zum Befestigen des Rohres (30) mit einer Rastverbindung (26, 28) ausgestaltet ist. Zusammenfassend stellt der Konnektor für ein hydraulisch betätigbares Kupplungssystem eine Lösung bereit, mit welcher eine einfach herzustellende, besonders variable und sicher abdichtende Verbindung zweier hydraulischer Komponenten erlaubt werden kann, die ferner leicht und kostengünstig sein kann

## Beschreibung

Die vorliegende Erfindung betrifft hydraulisch betätigbare Kupplungssysteme, wie insbesondere Einrück- oder Ausrücksysteme. Die vorliegende Erfindung betrifft insbesondere einen Konnektor zum Ausbilden einer Verbindung zwischen einem Schlauch und einem Rohr für ein hydraulisch betätigbares Kupplungssystem, wie beispielsweise mit einer Doppelkupplung, gemäß den Merkmalen des Anspruchs 1.

Ein hydraulisches System, umfassend einen Geberzylinder, einen Nehmerzylinder sowie eine diese verbindende Druckmediumsleitung, wird beispielsweise in einem Einrücksystem oder Ausrücksystem zur Betätigung einer Fahrzeugkupplung im Antriebsstrang von Kraftfahrzeugen verwendet. Die Fahrzeugkupplung dient der wahlweisen Unterbrechung der Drehmomentübertragung zwischen einem Verbrennungsmotor und einem Schaltgetriebe.

In der Druckmediumsleitung werden dabei oftmals Konnektoren verwendet, um eine geberseitige Hydraulikkomponente und eine nehmerseitige Hydraulikkomponente beziehungsweise an diesen angeschlossenen Hydraulikleitungen zu verbinden. Beispielsweise kann ein Konnektor eine Steckverbindung aufweisen, die einen männlichen Teil und einen weiblichen Teil aufweist. Derartige Steckverbindungen lassen sich oftmals durch einfaches in einander Stecken fixieren.

Nachteilig an den aus dem Stand der Technik bekannten Lösungen für das Verbinden von Hydraulikkomponenten in Kupplungssystemen ist es, dass derartige Lösungen, etwa aufweisend Steckverbindungen, aufwändig und kostenintensiv in der Herstellung sein können. Dies kann insbesondere gelten, wenn unterschiedliche Hydraulikleitungen verbunden werden sollen.

Es ist daher Aufgabe der vorliegenden Erfindung, einen Konnektor für ein hydraulisch betätigbares Kupplungssystem zu schaffen, mit welchem eine einfach und kostengünstig herzustellende, sicher abdichtende und/oder leichte Verbindung zweier Hydraulikleitungen erlaubt werden kann.

Die Lösung der Aufgabe erfolgt erfindungsgemäß durch einen Konnektor zum Verbinden zweier Leitungen zum Führen von Hydraulikflüssigkeit für ein hydraulisch betätigbares Kupplungssystem mit den Merkmalen des Anspruchs 1. Die Lösung der Aufgabe erfolgt erfindungsgemäß ferner durch hydraulisches System mit den Merkmalen des Anspruchs 5. Bevorzugte Ausgestaltungen der Erfindung sind in den Unteransprüchen angegeben, wobei die nachfolgend beschriebenen Merkmale einzeln oder in einer beliebigen Kombination ein Gegenstand der Erfindung sein können, wenn sich aus dem Kontext nicht explizit das Gegenteil ergibt.

Ein erfindungsgemäßer Konnektor zum Verbinden eines Schlauchs mit einem Rohr zum Führen von Hydraulikflüssigkeit für ein hydraulisch betätigbares Kupplungssystem weist einen ersten Verbindungsbereich zum Anordnen und Fixieren des Schlauchs auf und weist einen zweiten Verbindungsbereich zum Anordnen und Fixieren des Rohres auf. Dabei ist der erste Verbindungsbereich zum Befestigen des Schlauchs mit einer Crimpverbindung ausgestaltet und ist der zweite Verbindungsbereich zum Befestigen des Rohres mit einer Rastverbindung ausgestaltet.

Ein vorbeschriebener Konnektor erlaubt auf einfache und kostengünstige Weise ein Verbinden von unterschiedlichen hydraulischen Komponenten, insbesondere mittels eines Schlauchs und eines Rohres.

Der vorbeschriebene Konnektor dient somit insbesondere zum Ausbilden einer Verbindung, welche bevorzugt dazu verwendet werden kann, verschiedene Hydraulikkomponenten in einem Kupplungssystem, etwa eines Kraftfahrzeugs, beziehungsweise insbesondere in einem Einrücksystem oder Ausrücksystem für Kupplungen, wie beispielsweise für Doppelkupplungen, miteinander zu verbinden. Insbesondere kann der vorbeschriebene Konnektor dazu dienen, zwei Hydraulikleitungen, insbesondere zwei unterschiedlich ausgestaltete Hydraulikleitungen, welche jeweils mit einer hydraulischen Komponente verbunden sind, in einem vorbeschriebenen Hydrauliksystem miteinander zu verbinden. Die erste Hydraulikkomponente und die zweite Hydraulikkomponente sind dabei zweckmäßigerweise von einander verschieden. Beispielsweise kann eine der ersten und der zweiten Hydraulikkomponente eine Quelle für Hydraulikflüssigkeit, wie etwa einen Geberzylinder, umfassen, weshalb die erste Hydraulikleitung beziehungsweise der Konnektor von dieser Seite mit Hydraulikdruck beaufschlagt wird. Ein diesseitiger Anschluss des Konnektors kann somit der geberseitige Anschluss sein. Weiterhin kann eine weitere der ersten und der zweiten Hydraulikkomponente mit der eigentlichen Kupplung verbunden oder diese selbst sein, weshalb ein entsprechender diesseitiger Anschluss des Konnektors der nehmerseitige Anschluss sein kann. Beispielsweise kann der nehmerseitige Anschluss mit einer Hydraulikkomponente verbunden sein, um einen Einrückhebel oder Ausrückhebel zum Öffnen oder Schließen der Kupplung anzusteuern. Dies kann zum Beispiel ein Kupplungsnehmerzylinder ("clutch master cylinder", CMC oder "clutch slave cylinder", CSC) sein. Dabei kann als Hydraulikflüssigkeit beispielsweise und nicht beschränkend Bremsflüssigkeit oder Mineralöl verwendet werden. Verwendbare Drücke der Hydraulikflüssigkeit sind dem Fachmann dabei gut bekannt und können rein beispielhaft und in keiner Weise beschränkend in einem Bereich von 30-40bar liegen, wobei auch deutlich geringere oder auch höhere Drücke ausreichend sein können, wie beispielsweise im Bereich von 5bar.

Wie beschrieben weist der Konnektor einen ersten Verbindungsbereich zum Anordnen und Fixieren eines Schlauchs auf und weist der Konnektor einen zweiten Verbindungsbereich zum Anordnen und Fixieren eines Rohres auf. Grundsätzlich kann der erste Verbindungsbereich oder der zweite Verbindungsbereich den nehmerseitigen oder geberseitigen Anschluss aufweisen beziehungsweise ausbilden, wie dies vorstehend im Detail beschrieben ist. Derartige Bereiche beziehungsweise Abschnitte des Konnektors dienen somit dazu, jeweils eine Leitung, wie insbesondere eine Hydraulikleitung, anzuordnen und dort zu fixieren, wie dies nachstehend im Detail erläutert wird. Somit ist der Konnektor geeignet, bei einem an dem Konnektor beziehungsweise an den jeweiligen Verbindungsbereichen fixierten Zustand der beiden Leitungen, dem Schlauch und dem Rohr, diese druckdicht miteinander zu verbinden, so dass eine Hydraulikflüssigkeit von dem Schlauch in das Rohr oder umgekehrt strömen kann.

Bezüglich der Fixierung des Schlauchs und des Rohres an dem Konnektor ist der Konnektor derart ausgestaltet, dass der erste Verbindungsbereich zum Befestigen des Schlauchs mit einer Crimpverbindung ausgestaltet und ist und dass der zweite Verbindungsbereich zum Befestigen des Rohres mit einer Rastverbindung ausgestaltet ist. Somit ist der Konnektor für eine beidseitige formschlüssige Verbindung mit der jeweiligen Hydraulikleitung ausgestaltet. Dabei kann sowohl eine direkte formschlüssige Verbindung mit der entsprechenden Leitung vorgesehen sein, oder eine indirekte formschlüssige Verbindung über ein weiteres Bauteil kann vorgesehen sein.

Bezüglich der Ausgestaltung zu Ausbilden einer Crimpverbindung kann der Verbindungsbereich beispielsweise eine ausreichende Flexibilität aufweisen, um in geeigneter Weise plastisch verformbar zu sein. Unter einem auch als Bördeln bezeichneten Crimpverfahren wird somit insbesondere ein derartiges Verfahren verstanden, bei welchem die beiden zu fügenden Bauteile unter Aufwendung von Druck plastisch verformt werden und so eine formschlüssige Verbindung miteinander ausbilden. Ferner kann ein ausreichend großer insbesondere planarer Bereich vorgesehen sein, um eine Crimpverbindung einer beispielsweise aufgeschobenen Leitung mit einer Presshülse zu realisieren, wobei der Konnektor nicht zwingend plastisch verformt zu werden braucht.

Unter einer Ausgestaltung des zweiten Verbindungsbereichs zum Ausbilden einer Rastverbindung kann dabei ferner verstanden werden, dass insbesondere an dem Verbindungsbereich ein Rastmittel oder eine Aufnahme für ein Rastmittel vorgesehen ist.

Eine vorbeschriebene Ausgestaltung eines Konnektors kann dabei gegenüber den Lösungen aus dem Stand der Technik signifikante Vorteile bieten.

Durch die vorbeschriebene Ausgestaltung insbesondere der Verbindungsbereiche des Konnektors können Hydraulikleitungen, wie insbesondere ein etwa als Kunststoffschlauch ausgebildeter Schlauch und ein etwa als Stahlleitung ausgestaltetes Rohr, auf einfache Weise miteinander verbunden werden, obwohl sie eine unterschiedliche Ausgestaltung aufweisen und deshalb grundsätzlich unterschiedliche Verbindungsarten benötigen. Dadurch brauchen die entsprechenden Leitungen nicht angepasst werden an eine Verbindung untereinander sondern können beispielsweise angepasst werden an die zu verbindenden hydraulischen Komponenten. Somit lassen sich durch einen vorbeschriebenen Konnektor die verschiedensten hydraulischen Komponenten problemlos miteinander verbinden, ohne auf weitere Verbindungsbauteile, wie etwa Stecker oder ganze Steckverbindungen, zurückgreifen zu müssen. Insbesondere können durch die Verwendung eines vorbeschriebenen Konnektors Ausgestaltungen von Verbindungen unterschiedlicher Hydraulikleitungen beziehungsweise unterschiedlicher Hydraulikkomponenten realisiert werden, was auf diese einfache und kostengünstige Weise durch die aus dem Stand der Technik bekannten Lösungen nicht realisierbar war.

Weiterhin bietet der Konnektor eine besonders kostengünstige Lösung, da, wie oben ausgeführt, auf zusätzliche Verbindungselemente, wie etwa Stecksysteme, zum Verbinden der Leitungen verzichtet werden kann, und weiterhin der Konnektor als solches sehr kostengünstig herstellbar sein kann. Dadurch können die Kosten eines mit einem derartigen Konnektor ausgestatteten hydraulische Systems sehr gering gehalten werden.

Darüber hinaus kann das Gewicht des Konnektors und damit eines mit diesem ausgestatten hydraulischen Systems besonders gering gehalten werden. Denn zum Einen kann, wie dies vorstehend erläutert ist, auf weitere Verbindungsbauteile, wie etwa Steckverbindungen, verzichtet werden. Ferner sind die Anforderungen an den vorbeschriebenen Konnektor, nämlich insbesondere eine geeignete Druckdichtheit sowie die Möglichkeit einer entsprechenden Fixierung, auch mit vergleichswese leichten Materialien realisierbar. Somit kann durch die Verwendung besonders leichter Materialien Gewicht eingespart werden. Der vorliegende Konnektor eignet sich somit insbesondere vorteilhaft für eine Verwendung in mobilen Anwendungen, wie etwa in einem hydraulischen Kupplungssystem eines Fahrzeugs.

Weiterhin kann bei einem vorbeschriebenen Konnektor insbesondere der Nachteil umgangen werden, wonach Stahlrohre, welche im Stand der Technik oftmals verwendet werden und dabei eine zum Crimpen geeignete Strukturierung aufweisen, kostenintensiv und aufwändig in der Herstellung sein können. Darüber hinaus kann eine Crimpverbindung mit einem Stahlrohr oftmals nicht die gleiche Crimptiefe aufweisen, wie bei einer insbesondere flexiblen Kunststoffleitung und ferner kann hier gegebenenfalls ein unerwünschter Ausschuss bei der Herstellung produziert werden. Ferner ist es aus dem Stand der Technik beispielsweise bekannt, dass gecrimpte Kunststoff-Konnektoren beidseitig nur als männlicher Teil zur Verbindung zweier Schläuche anwendbar sind, wobei diese Einschränkung durch den vorbeschriebenen Konnektor ebenfalls überwunden ist.

Schließlich kann unter Verwendung eines vorbeschriebenen Konnektors eine besonders einfache und kostengünstige Ausgestaltung eines hydraulischen Systems erreicht werden, wobei auch eine automatisierte beziehungsweise Massenproduktion problemlos möglich ist. Dabei kann gleichzeitig durch eine derartige Kombination an Verbindungsmöglichkeiten eine besonders hohe Variabilität erreicht werden, so dass auf kostengünstige Weise die Ausgestaltungsvielfalt von hydraulischen Systemen vergrößert werden kann.

Zusammenfassend stellt der Konnektor für ein hydraulisch betätigbares Kupplungssystem eine Lösung bereit, mit welcher eine einfach herzustellende, besonders variable und sicher abdichtende Verbindung zweier hydraulischer Komponenten erlaubt werden kann, die ferner leicht und kostengünstig sein kann.

In einer Ausgestaltung des Konnektors kann der Konnektor, beispielsweise der gesamte Konnektor, aus einem Kunststoff geformt sein. Beispiele für geeignete Kunststoffe umfassen insbesondere thermoplastische Kunststoffe, wie etwa Polyethylen (PE), Polyetheretherketon (PEEK) oder Acrylnitril-Butadien-Styrol- (ABS) -Kunststoff. Insbesondere in dieser Ausgestaltung kann der Konnektor ein besonders geringes Gewicht aufweisen, so dass der Konnektor besonders gut für mobile Anwendungen geeignet sein kann. Somit kann in dieser Ausgestaltung insbesondere der Nachteil des Stands der Technik umgangen werden, wonach Konnektoren aus Stahl Verwendung finden, welche ein insbesondere für mobile Anwendungen gegebenenfalls unerwünscht hohes Gewicht aufweisen. Darüber hinaus können Konnektoren aus Kunststoff, etwa verglichen mit Konnektoren aus Stahl, deutlich kostengünstiger in der Herstellung sein.

Ferner kann insbesondere, wenn der gesamte Konnektor inklusive der Verbindungsbereiche aus einem Kunststoff geformt ist, besonders einfach sowohl eine Crimpverbindung als auch eine Rastverbindung ausbildbar sein, da sich ein Kunststoff auf einfache Weise verformen lässt und sich ferner auf einfache Weise Strukturen in den Kunststoff einbringen lassen. Darüber hinaus bietet ein Konnektor aus einem Kunststoff den Vorteil einer besonders kostengünstigen Herstellbarkeit sowie einer besonders einfachen Adaptierbarkeit an das gewünschte Anwendungsgebiet, da etwa durch einen Spritzgussprozess auf einfache Weise im Wesentlichen jede gewünschte Geometrie herstellbar ist.

In einer weiteren Ausgestaltung des Konnektors kann der erste Verbindungsbereich strukturiert sein. Insbesondere kann der erste Verbindungsbereich mit einer derartigen Struktur strukturiert sein, welche einen, etwa durch einen Crimpvorgang hervorgerufenen, Formschluss unterstützen oder hervorrufen kann. Beispielsweise kann der Verbindungsbereich einen oder eine Mehrzahl an Vorsprüngen beziehungsweise Hinterschnitten, etwa in einer gezackten oder Wellenform, aufweisen, die selbst dem Ausbilden einer formschlüssigen Verbindung dienen können, oder zwischen welchen eine Crimpverbindung ausgebildet werden kann. In dieser Ausgestaltung kann eine besonders stabile formschlüssige Verbindung ausgebildet werden. Darüber hinaus kann eine derartige Strukturierung als Positionierungshilfe für eine Crimpverbindung dienen, weshalb in dieser Ausgestaltung eine besonders definierte und reproduzierbare Struktur erhältlich sein kann.

In einer weiteren Ausgestaltung des Konnektors kann der zweite Verbindungsbereich wenigstens eine Aufnahme, beispielsweise Öffnung, zum Aufnehmen eines Rastmittels, wie etwa einer Rastnase, aufweisen. Insbesondere in dieser Ausgestaltung kann beispielsweise dann, wenn der zweite Verbindungsbereich des Konnektors als weiblicher Teil beziehungsweise als Buchse ausgestaltet ist, ein Rastmittel in die Öffnung eingreifen und so eine sichere Fixierung ausbilden. Dabei kann diese Verbindung jedoch ferner auf einfache Weise lösbar gestaltet sein, so dass auch eine Öffenbarkeit gegeben ist, was anwendungsbedingt von Vorteil sein kann.

Hinsichtlich weiterer spezifischer technischer Merkmale und Vorteile des erfindungsgemäßen Konnektors wird hiermit explizit auf die nachfolgende Beschreibung des hydraulischen Systems, die Figuren sowie die Beschreibung der Figuren verwiesen.

Die vorliegende Erfindung betrifft ferner ein hydraulisches System, insbesondere ein hydraulisches Kupplungssystem, aufweisend einen Konnektor mit einem ersten Verbindungsbereich und mit einem zweiten Verbindungsbereich und ferner aufweisend einen Schlauch zum Führen von Hydraulikflüssigkeit, welcher durch eine Crimpverbindung an dem ersten Verbindungsbereich fixiert ist, und aufweisend ein Rohr zum Führen von Hydraulikflüssigkeit, welches durch eine Rastverbindung an dem zweiten Verbindungsbereich fixiert ist.

Insbesondere eine derartige Kombination des Konnektors mit den entsprechenden Leitungen kann zu den mit Bezug auf den Konnektor beschriebenen Vorteilen führen. Zusammenfassend schafft ein derartiges hydraulisch betätigbares System, wie insbesondere Kupplungssystem, eine kostengünstige und stabile Lösung, um ein besonders breites und variables Anwendungsgebiet an zu verbindenden hydraulischen Komponenten zu ermöglichen. Schließlich lässt sich eine derartige Lösung besonders einfach Herstellen, indem in einem ersten Schritt der Konnektor mit dem Schlauch durch eine Crimpverbindung formschlüssig verbunden werden kann. In einem weiteren Schritt kann das Rohr an dem Verbindungsbereich ebenfalls formschlüssig fixiert werden, jedoch durch eine Rastverbindung.

Dabei kann der Schlauch insbesondere ein Kunststoffschlauch sein und/oder kann das Rohr etwa ein Kunststoffrohr oder ein metallisches Rohr, beispielsweise ein Stahlrohr, sein. Insbesondere in dieser Ausgestaltung ist eine aus dem Stand der Technik nicht bekannte Variabilität der Verbindungen von hydraulischen Komponenten möglich.

Es ist dabei eine einfache und kostengünstige Möglichkeit realisierbar, mit welcher insbesondere eine Verbindung eines Kunststoffschlauches und eines metallischen, etwa Stahlrohres, oder Kunststoffrohres für Hochdruckanwendungen etwa in einem Kupplungssystem ermöglicht werden kann. Dies kann insbesondere deshalb von Vorteil sein, da Rohre unter Umständen aufgrund ihrer Steifheit Vibrationen oder Geräusche von dem Getriebe beziehungsweise von dem Motor auf das Pedal übertragen, was etwa für einen Fahrer eines mit einem derartigen hydraulischen System ausgestatteten Fahrzeugs Komforteinbußen mit sich bringen kann. Ein Schlauch kann dagegen aufgrund seiner Flexibilität als Dämpfer dienen, wodurch die vorgenannten Nachteile überwunden werden können. Darüber hinaus lassen sich Rohre insbesondere bei begrenztem Bauraum nur schwierig installieren, so dass die Herstellbarkeit durch eine Kombination eines Rohres mit einem Schlauch vereinfacht werden kann.

Weiterhin bietet sich insbesondere in dieser Ausgestaltung der Vorteil, dass etwa im Gegensatz zu aus dem Stand der Technik bekannten Lösungen aufweisend Konnektoren und Rohre aus Stahl, derartige Verbindungen insbesondere durch die Verwendung von Kunststoff für den Konnektor, das Rohr sowie den Schlauch besonders kostengünstig sein können und ferner nur ein begrenztes Gewicht aufweisen brauchen. Ein geeigneter Kunststoff für die entsprechenden Komponenten, insbesondere für den Schlauch, kann dabei etwa Ethylen-Propylen-Dien-Kautschuk (EPDM) umfassen. Das Rohr kann beispielsweise aus Stahl oder aus thermoplastischen und daher gut schweißbaren Kunststoffen ausgestaltet sein. Nicht beschränkende Beispiele umfassen Polyethylen (PE), Polyetheretherketon (PEEK) oder Acrylnitril-Butadien-Styrol- (ABS) -Kunststoff. Ferner ist die vorbeschriebene Lösung insbesondere in dieser Ausgestaltung deutlich kostengünstiger, als etwa eine Lösung aufweisend einen Kunststoffschlauch, welcher mit einem Steckverbindungsbauteil, wie etwa einer Buchse, verbunden ist, wie dies eine aus dem Stand der Technik bekannte Lösung vorschlägt.

Unter einem Schlauch kann dabei insbesondere und in keiner Weise beschränkend eine derartige Leitung verstanden werden, welche biegeweich ist und somit im Wesentlichen keine oder nur geringe Kräfte senkrecht zur Erstreckungsrichtung aufnehmen kann, wohingegen unter einem Rohr insbesondere eine derartige Leitung verstanden werden kann, welche etwa biegesteif sein kann und auch vergleichsweise große Kräfte senkrecht zu der Erstreckungsrichtung aufnehmen kann. Beispielsweise kann ein Rohr aus einem Material geformt sein, dass eine Biegefestigkeit (σB 3,5%) nach ISO 178 in einem Bereich von ungefähr 200 MPa oder darüber aufweisen kann, wohingegen Schläuche beispielsweise aus einem Material geformt sein können, welches typischer Weise Werte der Biegefestigkeit in einem Bereich von kleiner oder gleich 75%, beispielsweise kleiner oder gleich 50%, der Biegefestigkeit des Rohres aufweisen können. Insbesondere kann unter einem Rohr eine Leitung verstanden werden, dessen Material eine Biegefestigkeit (σB 3,5%) nach ISO 178 in einem Bereich von ungefähr größer oder gleich 100 MPa, beispielsweise größer oder gleich 150 MPa, aufweisen kann, wohingegen unter einem Schlauch eine Leitung verstanden werden kann, dessen Material eine Biegefestigkeit (σB 3,5%) nach ISO 178 in einem Bereich von ungefähr kleiner oder gleich 100, beispielsweise kleiner oder gleich 75 MPa, beispielsweise im Bereich von 50 MPa, aufweisen kann, wobei die vorgenannten Werte nur beispielhaft und nicht beschränkend sind.

In einer weiteren Ausgestaltung des hydraulischen Systems kann das hydraulische System Bestandteil eines Kupplungssystems sein. Dabei kann das hydraulische System insbesondere ein derartiges Kupplungssystem sein, welches etwa eine Doppelkupplung und/oder ein CSC aufweist. Exemplarische und nicht beschränkende Beispiele umfassen dabei insbesondere hydraulisch betätigbare Einrücksysteme oder Ausrücksysteme zum Einsatz in Kraftfahrzeugen.

Hinsichtlich weiterer spezifischer technischer Merkmale und Vorteile des erfindungsgemäßen hydraulischen Systems wird hiermit explizit auf die vorstehende Beschreibung des Konnektors, die Figuren sowie die Beschreibung der Figuren verwiesen.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Seitenansicht einer Ausführungsform eines Konnektors gemäß der Erfindung;
Fig. 2: eine schematische Schnittansicht der Ausführungsform aus Fig. 1;
Fig. 3: eine weitere schematische Ansicht der Ausführungsform aus Figur 1 mit einem Schlauch und einem Rohr; und
Fig. 4: eine schematische Seitenansicht und teilweise Explosionsansicht von Bestandteilen eines hydraulischen Systems.

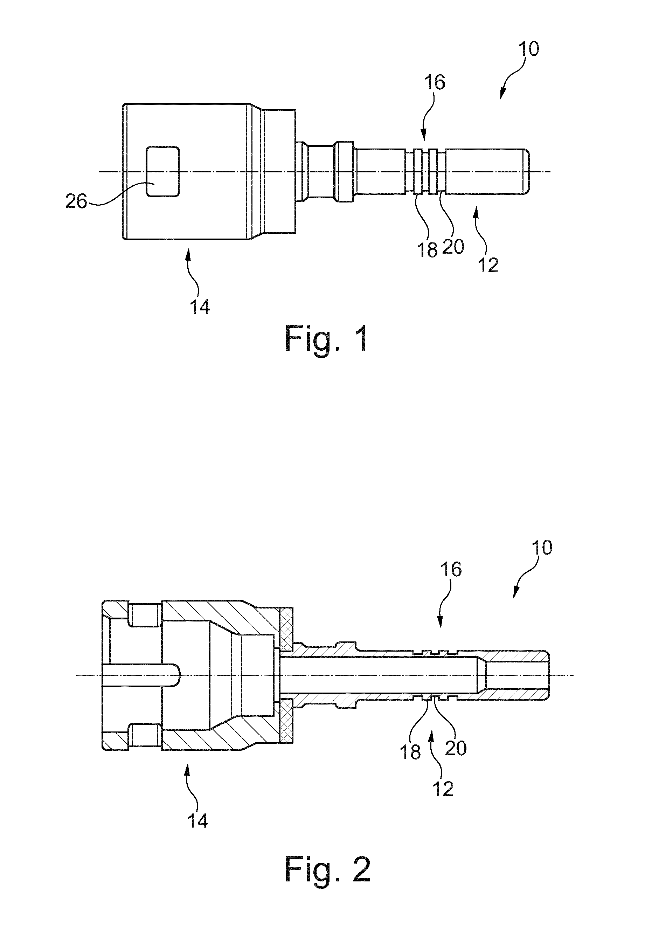

In den Figuren 1 und 2 ist eine Ausgestaltung eines Konnektors 10 gezeigt. Ein derartiger Konnektor 10 dient insbesondere zum Verbinden eines Schlauchs 31 mit einem Rohr 30 zum Führen von Hydraulikflüssigkeit in einem Kupplungssystem. Der Konnektor 10 dient insbesondere zum Ausbilden einer druckdichten Verbindung des Schlauchs 31 mit dem Rohr 30 und damit zum Verbinden zweier Hydraulikkomponenten beispielsweise als Bestandteil eines hydraulischen Kupplungssystems, insbesondere in einem Kraftfahrzeug.

Der Konnektor 10 kann beispielsweise zumindest teilweise aus Kunststoff ausgeformt sein oder etwa aus Kunststoff bestehen. Beispielhaft können zum Ausbilden des Konnektors Polydiene, wie etwa Polyethylen, oder auch Polyetheretherketon (PEEK) oder Acrylnitril-Butadien-Styrol- (ABS) -Kunststoff verwendet werden. Der Konnektor 10 weist einen ersten Verbindungsbereich 12 zum Anordnen und Fixieren des Schlauchs 31 auf und weist einen zweiten Verbindungsbereich 14 zum Anordnen und Fixieren des Rohres 30 auf. Dabei ist der erste Verbindungsbereich 12 zum Befestigen des Schlauchs 31 mit einer Crimpverbindung ausgestaltet und ist der zweite Verbindungsbereich 14 zum Befestigen des Rohres 30 mit einer Rastverbindung beziehungsweise einer Schnappverbindung ausgestaltet.

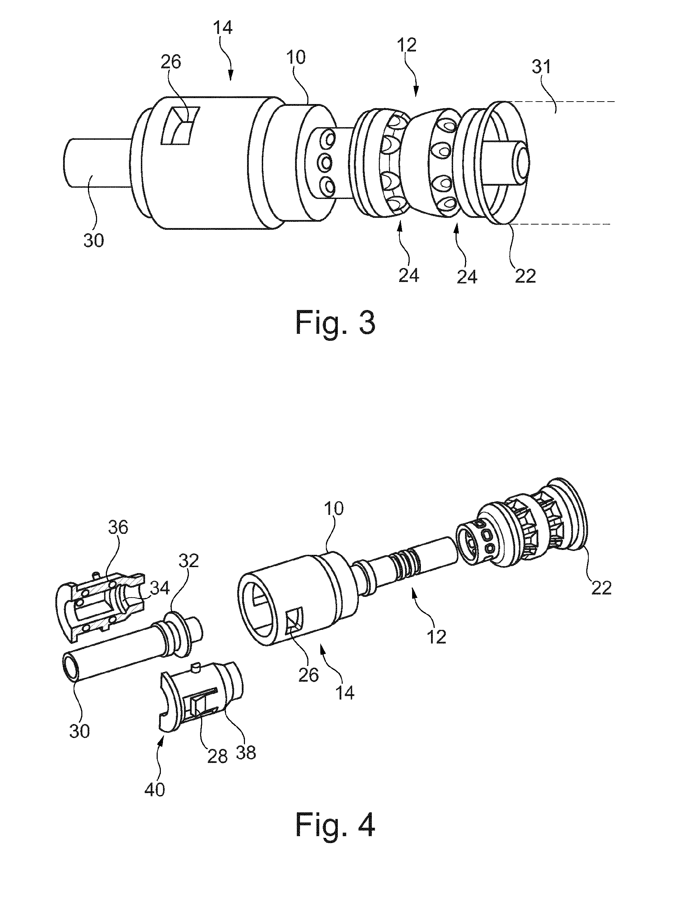

Dabei ist zu erkennen, dass der erste Verbindungsbereich 12 als männlicher Teil beziehungsweise als Stecker ausgestaltet ist, auf welchen der Schlauch 31 geschoben werden kann. Zum Ausbilden einer Crimpverbindung kann der erste Verbindungsbereich 12 strukturiert sein beziehungsweise eine Strukturierung 16 aufweisen, um etwa eine Crimpverbindung stabiler und definierter zu gestalten. Beispielsweise können in dem ersten Verbindungebereich 12 beispielsweise ringförmig gezackte Hinterschnitte 18 beziehungsweise Nuten 20 vorgesehen sein. Dabei kann die Crimpverbindung ferner unter Zuhilfenahme einer Presshülse 22 realisiert werden, wie dies in der Figur 3 angedeutet ist, wobei der Schlauch 31 nur angedeutet ist.

Der Innendurchmesser des Schlauches 31 kann dazu geringfügig kleiner sein als der Außendurchmesser der Hinterschnitte 18, sodass die Innenwand des Schlauchs 31 plastisch und/oder elastisch verformt wird, wodurch gleichzeitig eine Abdichtung realisiert und ein fester Sitz erreicht wird. Eine derartige Verbindung wird auch Tannenbaum-Verbindung genannt, welche an sich bereits eine formschlüssige Verbindung bereitstellen kann. Über den Schlauch kann dann zumindest in Teilbereichen eine Presshülse 22 geschoben und auf den Schlauch sowie den Verbindungsbereich 12 mittels einer oder mehrerer, im vorliegenden Ausführungsbeispiel zweier, ringförmiger Einkerbungen 24 verquetscht. Eine derartige Verbindung kann die Crimpverbindung bereitstellen. Ein Konnektor 10 mit einem aufgecrimpten Schlauch 31 ist in Figur 3 gezeigt, wobei der Schlauch 31 nur angedeutet ist.

Der zweite Verbindungsbereich 14 ist insbesondere als weiblicher Teil einer Steckverbindung beziehungsweise als Hülse ausgestaltet. Dabei kann der zweite Verbindungsbereich 14 beispielsweise eine Aufnahme 26 zum Aufnehmen eines Rastmittels 28 aufweisen.

Bezüglich der Ausgestaltung der Rastverbindung ist in der Figur 4 eine teilweise Explosionansicht gezeigt, wobei der Konnektor 10 und die Presshülse 22 gezeigt sind. Ferner ist das Rohr 30 gezeigt, weiches eine Strukturierung 32 zum Eingreifen in eine Aufnahme 34 eines aus zwei Adapterteilen 36, 38 ausgestalteten Adapters 40 aufweist. Es ist somit zu erkennen, dass das Rohr 30 in dem Adapter 40 fixiert werden kann und durch ein Eingreifen des Rastmittels 28 in die Aufnahme 26 in dem zweiten Verbindungsbereich 14 beziehungsweise an dem Konnektor 10 fixiert werden kann.

Der Schlauch 31 kann dabei an seinem dem Konnektor 10 entgegengesetzten Ende mit einem weiteren Verbindungsmittel, wie etwa Stecker oder einer Buchse verbunden sein. Entsprechend kann das Rohr 30 ebenfalls an seinem dem Konnektor 10 entgegengesetzten Ende mit einem weiteren Verbindungsmittel, wie etwa einem Stecker oder einer Buchse, verbunden sein. So können die mit den entsprechenden Steckern beziehungsweise Buchsen verbundenen hydraulischen Komponenten auf einfache Weise miteinander verbunden werden.

### Bezugszeichenliste

- 10: Konnektor
- 12: erster Verbindungsbereich
- 14: zweiter Verbindungsbereich
- 16: Strukturierung
- 18: Hinterschnitt
- 20: Nut
- 22: Presshülse
- 24: Einkerbung
- 26: Aufnahme
- 28: Rastmittel
- 30: Rohr
- 31: Schlauch
- 32: Strukturierung
- 34: Aufnahme
- 36: Adapterteil
- 38: Adapterteil
- 40: Adapter

## Patentansprüche

1. Konnektor zum Verbinden eines Schlauchs (31) mit einem Rohr (30) zum Führen von Hydraulikflüssigkeit für ein hydraulisch betätigbares Kupplungssystem, wobei der Konnektor (10) einen ersten Verbindungsbereich (12) zum Anordnen und Fixieren des Schlauchs (31) aufweist und wobei der Konnektor (10) einen zweiten Verbindungsbereich (14) zum Anordnen und Fixieren des Rohres (30) aufweist, **dadurch gekennzeichnet, dass** der erste Verbindungsbereich (12) zum Befestigen des Schlauchs (31) mit einer Crimpverbindung ausgestaltet ist und dass der zweite Verbindungsbereich (14) zum Befestigen des Rohres (30) mit einer Rastverbindung ausgestaltet ist.

2. Konnektor nach Anspruch 1, **dadurch gekennzeichnet, dass** der Konnektor (10) aus einem Kunststoff geformt ist.

3. Konnektor nach Anspruch 1 oder 2, **dadurch gekennzeichnet, dass** der erste Verbindungsbereich (12) strukturiert ist.

4. Konnektor nach einem der Ansprüche 1 bis 3, **dadurch gekennzeichnet, dass** der zweite Verbindungsbereich (14) wenigstens eine Aufnahme (26) zum Aufnehmen eines Rastmittels (28) aufweist.

5. Hydraulisches System, aufweisend einen Konnektor (10) mit einem ersten Verbindungsbereich (12) und mit einem zweiten Verbindungsbereich (14) und ferner aufweisend einen Schlauch (31) zum Führen von Hydraulikflüssigkeit, welcher durch eine Crimpverbindung an dem ersten Verbindungsbereich (12) fixiert ist, und aufweisend ein Rohr (30) zum Führen von Hydraulikflüssigkeit, welches durch eine Rastverbindung an dem zweiten Verbindungsbereich (14) fixiert ist.

6. Hydraulisches System nach Anspruch 5, **dadurch gekennzeichnet, dass** der Schlauch (31) ein Kunststoffschlauch ist und dass das Rohr (30) ein Kunststoffrohr oder ein metallisches Rohr ist.

7. Hydraulisches System nach einem der Ansprüche 5 oder 6, **dadurch gekennzeichnet, dass** das hydraulische System Bestandteil eines Kupplungssystems ist.
